# EUROPÄISCHE PATENTSCHRIFT

(11) **EP 0 591 842 B1**
(45) Veröffentlichungstag und Bekanntmachung des Hinweises auf die Patenterteilung: **13.03.2002**
(21) Anmeldenummer: 93115787.9
(22) Anmeldetag: 30.09.1993
(51) Int. Cl.: H04H 1/00

(54) **Verschleierung von Bitfehlern und Interpolationen in Digitaltonsignalen**
Method and apparatus for concealing bit errors and interpolations in digital sound signals
Méthode et dispositif pour dissimuler les erreurs de bit et les interpolations dans les signaux sonores numériques

(30) Priorität: 09.10.1992 DE 4234015
(43) Veröffentlichungstag der Anmeldung: 13.04.1994
(73) Patentinhaber: DEUTSCHE THOMSON-BRANDT GMBH, 78048 Villingen-Schwenningen (DE)
(72) Erfinder: Kühn, Hans-Robert, D-78112 St. Georgen (DE); Storz, Dieter, D-78730 Lauterbach (DE); Gehringer, Reinhard, D-78176 Blumberg (DE)

(56) Entgegenhaltungen:
- DE-A- 4 111 131
- FR-A- 2 486 272
- GB-A- 2 117 607

## Beschreibung

Bei der Wiedergabe eines Audiosignals, insbesondere eines digitalen Audiosignals, treten vereinzelt oder dauerhaft Fehler auf, die mit einem entsprechenden Daten/Korrektursystem nicht mehr korrigiert werden können. In einem solchen Fall wird dann eine Interpolation vorgenommen, die eine Abschätzung des möglichen Signals vornimmt, und die bis zu einem gewissen Grade nicht von dem Ohr wahrgenommen werden kann. Eine derartige Interpolation wird z.B. in den Schaltungen Sony-IC CXD1167Q oder Philips SAA7220 (Sony, Philips: geschützte Marken) durchgeführt. Ein Nachteil dieser Einrichtungen ist die Tatsache, daß die Interpolationen bis zu einem gewissen Grade vom Benutzer wahrgenommen wird.

Aus der FR-A-2 486 272 ist ein Gerät zur Wiedergabe von Audio-Signalen bekannt, welches eine Schaltung zur Wiedergabe von Audio-Signalen aufweist, mit einer Fehlerkorrekturstufe, einem Zählmittel, das die Anzahl von Fehlern pro vorbestimmter Zeiteinheit mißt, und einem mit dem Zählmittel verbundenen zweiten Mittel, das in Abhängigkeit von einem Ausgangssignals des Zählmittels Frequenzanteile des Audio-Signals in ihrer Amplitude begrenzt und/oder reduziert. Darin wird das wiederzugebende Audio-Signal mittels eines Abnehmers von einem Aufzeichnungsträger abgenommen und einer Frequenzcharakteristik-Schaltung zugeführt, deren Ausgangssignal der Fehlerkorrekturstufe zugeführt wird. Das Ausgangssignal der Fehlerkorrekturstufe wird einer Wiedergabeeinrichtung zugeführt. Ein Zählmittel zählt von der Fehlerkorrekturstufe abgegebene Fehlerimpulse. In Abhängigkeit vom Zählerstand des Zählmittels wird die Frequenzcharakteristik der der Fehlerkorrekturstufe vorgeschalteten Frequenzcharakteristik-Schaltung geändert.

Als nachteilig an diesem Verfahren bzw. der Schaltung des bekannten Geräts ist anzusehen, daß bei nichtkorrigierbaren Fehlern der fehlerhafte Datenblock beseitigt bzw. durch Daten ersetzt wird, die durch eine arithmethische Operation aus anderen Daten gewonnen werden. Diese ersetzten Daten können zu Störungen im wiedergegebenen Audio-Signal führen, die vom Benutzer wahrnehmbar sind.

Aufgabe der Erfindung ist es, Interpolationen im Audiosignal unhörbar zu machen.

Gemäß der Erfindung nach Anspruch 1 wird dieses mit einem Verfahren zur Wiedergabe eines Audiosignals, das vor der Wiedergabe einer oder mehreren Interpolationen unterzogen wird, erreicht, wobei Frequenzanteile des Audiosignals nach der Interpolation in Abhängigkeit von der Interpolationsrate in ihrer Amplitude begrenzt und/oder reduziert werden. Anspruch 7 beschreibt eine entsprechende Schaltung zur Durchführung des Verfahrens. In den Unteransprüchen sind vorteilhafte Weiterbildungen der Erfindung beschrieben.

Der Erfindung liegt die Erkenntnis zugrunde, daß die Hörbarkeit von Interpolationen stark von der Audiofrequenz abhängig ist und bei Interpolationen deshalb auf die Hörbarkeit von Interpolationen Rücksicht genommen werden sollte. Insbesondere ist es für die Wahrnehmung von Interpolationen nicht gleich, ob ein starker Anteil von tiefen oder hohen Frequenzen im Audiospektrum enthalten ist. So kann z.B. bei tiefen Frequenzen eine höhere Interpolations-Rate zugelassen werden als bei hohen Frequenzen.

Der Nachteil der oben aufgeführten bekannten Einrichtungen ist die Tatsache, daß dort die Hörbarkeit von Interpolationen, die stark von der Audiofrequenz abhängig ist, nicht berücksichtigt wird.

Da die Anzahl der Interpolationen nicht ohne weiteres gesenkt werden kann, wird vorzugsweise vorgeschlagen, bei höheren Frequenzanteilen in Abhängigkeit der Interpolationsrate eine Reduzierung und/oder Begrenzung der Amplitude durchzuführen.

Nachfolgend wird die Erfindung anhand eines in der Zeichnung dargestellten Ausführungsbeispiels näher erläutert. In der Zeichnung stellen dar:
- Fig. 1: Schaltbild einer Interpolationsstufe
- Fig. 2: Darstellung der frequenzabhängigen Hörbarkeitsgrenze von Interpolationen bei der Wiedergabe von Sinussignalen
- Fig. 3: Blockschaltbild einer Audiowiedergabeschaltung konventionellen Typs
- Fig. 4: Blockschaltbild einer Audiowiedergabeschaltung gemäß der Erfindung
- Fig. 5: Alternatives Blockschaltbild einer Audiowiedergabeschaltung zur Fig. 4
- Fig. 6: Pulsdiagramm gemäß der Schaltung nach Fig. 5
- Fig. 7: Blockschaltbild einer Audiowiedergabeschaltung mit zweistufiger physiologischer Steuerung
- Fig. 8: Eine alternative Ausführung des Blockschaltbildes gemäß Fig. 4
- Fig. 9: Eine weitere alternative Ausführung des Blockschaltbildes gemäß Fig. 4.

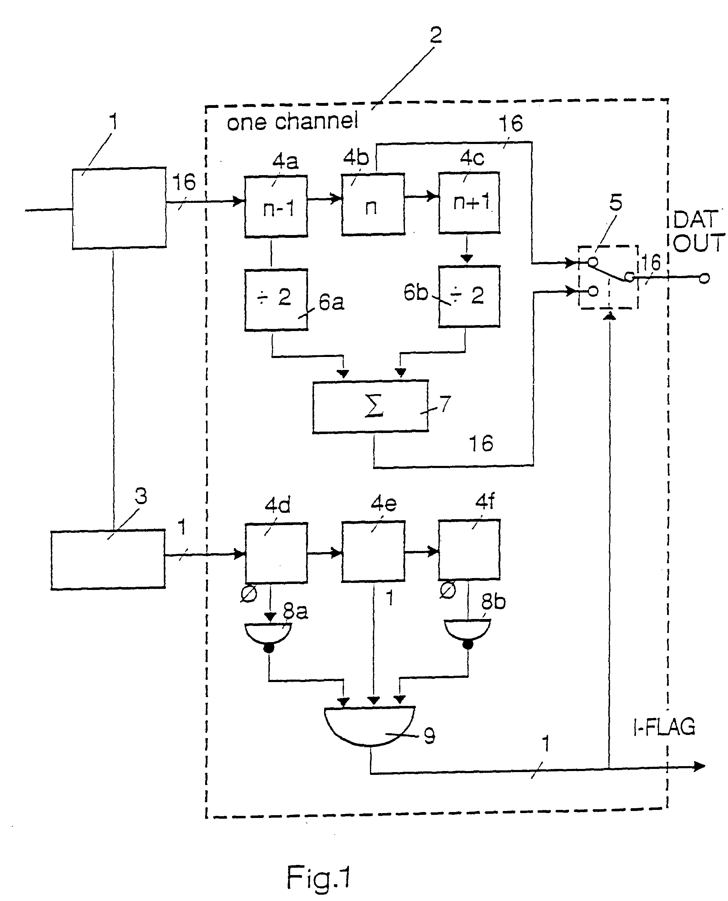

Fig. 1 zeigt eine Prinzipschaltung einer Audiowiedergabeschaltung mit einer linearen Interpolationsstufe 2 und einer Fehlerkorrekturschaltung 1 wie sie z.B. aus Sony IC CXD1167Q oder Philips SAA 7220 bekannt ist (Sony, Philips: geschützte Marken). Die Fehlerkorrekturstufe 1 weist zwei Ausgänge auf, wobei der erste Ausgang direkt mit der Interpolationsstufe 2 eines Audiokanals verbunden ist und der zweite Ausgang mit einem Eingang einer Abtastwertprüfschaltung (sample check) 3 verbunden ist. Der erste Ausgang der Fehlerkorrekturschaltung 1 ist mit einem Eingang eines ersten Abtastwerthaltegliedes (n-1) 4a verbunden, welches seinerseits über eine Datenleitung mit einem weiteren Abtastwerthalteglied 4b verbunden ist. Das erste Abtastwerthalteglied 4a ist außerdem mit einer Teilerschaltung 6a verbunden, die den Wert des Abtastwertes durch 2 dividiert. Ein Ausgang des Abtastwerthaltegliedes 4b ist direkt auf einen ersten Eingang eines Schalters 5 geführt, während ein anderer Ausgang des Abtastwerthaltegliedes 4b mit einem Eingang eines dritten Abtastwerthaltegliedes 4c (n+1) verbunden ist, dessen Ausgang mit einer zweiten Teilerschaltung 6b verbunden ist. Die Ausgänge beider Teilerschaltungen 6a und 6b sind jeweils mit einem Summierglied 7 verbunden, dessen Ausgang mit einem zweiten Eingang des Schalters 5 verbunden ist. Der Ausgang des Schalters 5 bildet den Datenausgang der Interpolationsstufe 2.

Die Abtastwertprüfschaltung 3 prüft die Abtastwerte auf ihre Fehlerhaftigkeit, d. h. auch ihre Unkorrigierbarkeit durch die Fehlerkorrekturstufe 1, und generiert bei einem fehlerhaften Abtastwert eine logische 1 und bei einem richtigen Abtastwert eine logische 0. Diese Werte werden nachgeschalteten Haltegliedern 4d, 4e und 4f zugeführt. Die Ausgänge der Halteglieder 4d und 4f sind jeweils mit Invertern 8a und 8b verbunden, deren Ausgänge zusammen mit dem Ausgang des Haltegliedes 4e auf den Eingang eines UND-Gatters 9 geführt sind. Der Ausgang des UND-Gatters 9 ist auf den Schalter 5 geführt und steuert die Schalterstellung zwischen dem mit dem Ausgang des Summiergliedes 7 verbundenen Eingang und dem mit dem Abtasthalteglied 4b verbundenen Eingang. Des weiteren ist der Ausgang des UND-Gatters 9 aus der Interpolationsstufe 2 heraus geführt und bildet einen sogenannten I-Flag-Ausgang.

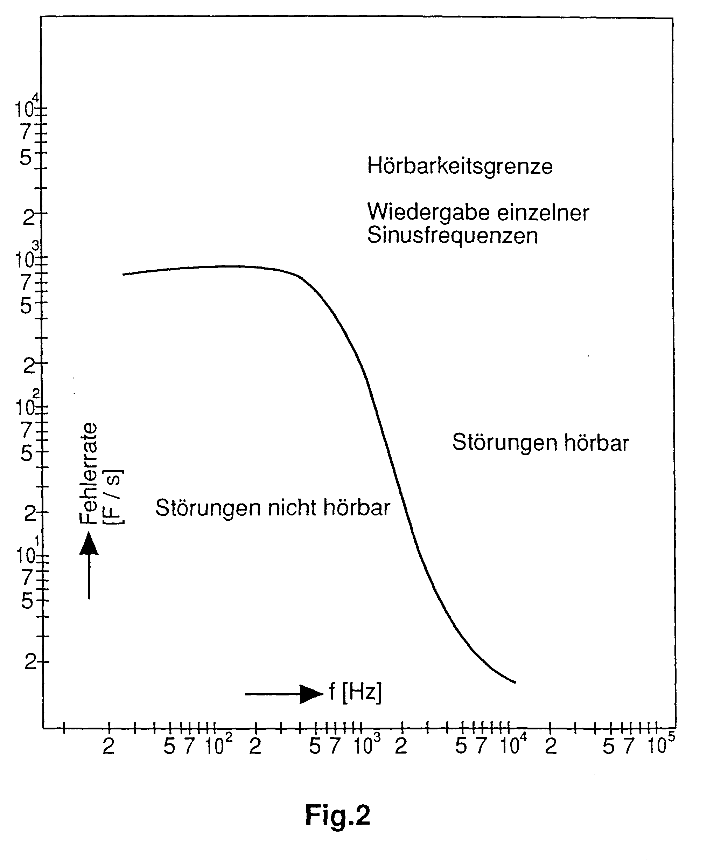

Fig. 2 zeigt den Verlauf der experimentell ermittelten Hörbarkeitsgrenze über die Anzahl der Interpolationen pro Sekunde bzw. der Fehlerrate in Abhängigkeit von der Audiofrequenz (logarithmisch aufgetragen). Bei tiefen Frequenzen kann eine höhere Interpolationsrate zugelassen werden als bei hohen Frequenzen.

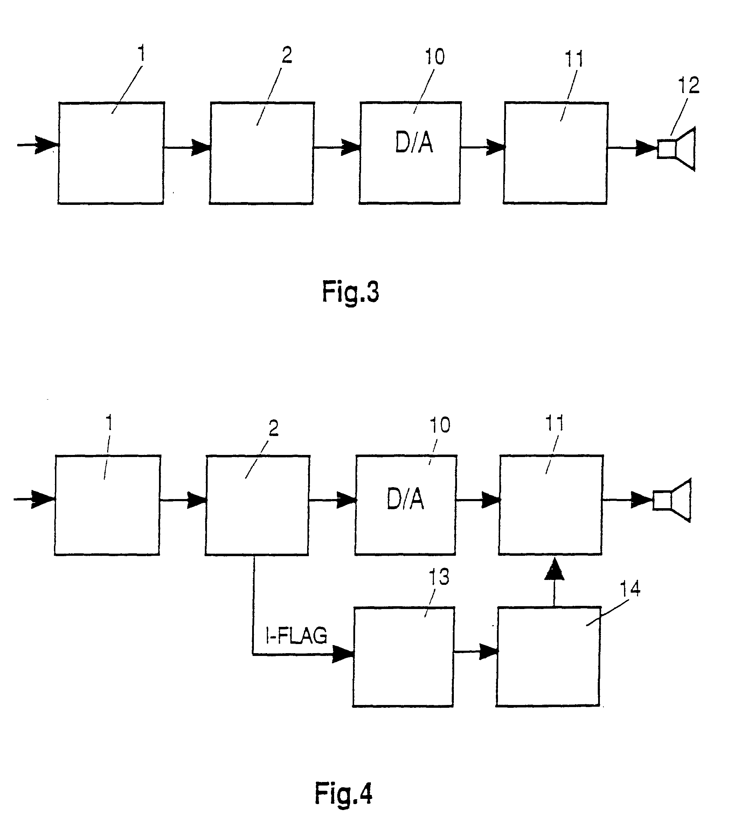

Fig. 3 zeigt ein Blockschaltbild einer Audio-Wiedergabeschaltung konventionellen Typs welche eine Fehlerkorrekturschaltung 1, eine Interpolationsstufe 2, einen D/A-Wandler 10, eine Schaltung 11 zur Verarbeitung von analogen Audiosignalen und einen Lautsprecher 12 aufweist.

Fig. 4 zeigt ein Blockschaltbild einer Audiowiedergabeschaltung gemäß der Erfindung. Einer bekannten Fehlerkorrekturschaltung 1 ist die aus der Fig. 1 bekannte Interpolationsschaltung 2 nachgeschaltet. Der Datenausgang der Interpolationsschaltung 2 ist mit dem Eingang eines D/A-Wandlers 10 verbunden, dessen Ausgang mit der analogen Audio/Signalverarbeitungsschaltung 11 verbunden ist. Der I-Flag-Ausgang der Interpolationsstufe 2 ist mit einer Schwellwertbewertungs- und -verarbeitungsstufe 13 verbunden, die ihrerseits mit einer physiologischen Korrektur- und Kontrollstufe 14 verbunden ist. Die physiologische Korrekturstufe 14 reduziert je nach dem, ob die Interpolationsrate einen vorbestimmten Schwellwert übersteigt, die Amplitude der höheren Frequenzen des analogen Audiosignals mittels Steuerung der analogen Audioverarbeitungsschaltung 11.

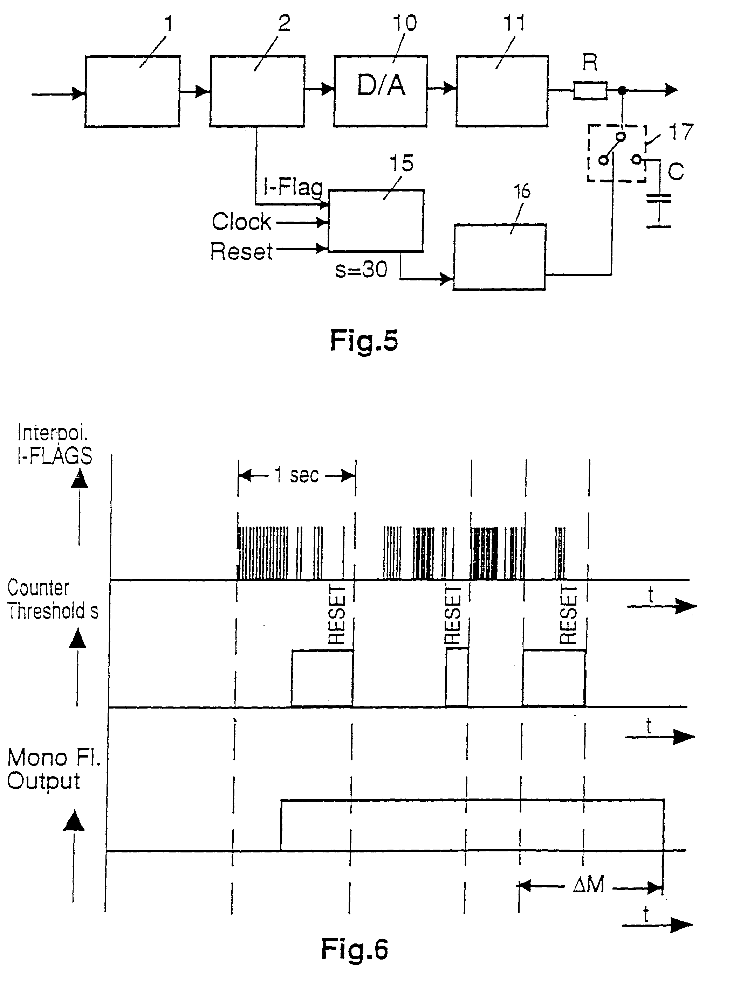

In praktischen Versuchen hat sich gezeigt, daß der Schwellwert S vorzugsweise bei S = 30 Interpolationen pro Sekunde liegen sollte. Er kann, wie in Fig. 5 gezeigt, mittels eines Zählers 15, der neben dem I-Flag-Eingang einen Clock- und Reseteingang aufweist, sekundenweise die Anzahl der Interpolationen bestimmen. Nach Überschreiten des Schwellwertes S wird in einfacher Weise über ein Mono-Flip-Flop 16 zur Impulsbreitenverlängerung um ΔM ein Tiefpaß 17 im Audio-Teil aktiviert.

Aus der Fig. 6 ist das Impulsdiagramm für die Einrichtung nach Fig. 5 zu ersehen. Am Ende einer vorbestimmten Zeiteinheit, hier eine Sekunde, wird mittels des Reset-Signals am Eingang des Zählers 15 der Ausgang des Zählers 15 auf Null zurückgesetzt. Der Ausgang des Mono-Flip-Flops 16 aktiviert so lange den Tiefpaß 17, bis die Zahl der Interpolationen pro Zeiteinheit unter den vorbestimmten Wert sinkt.

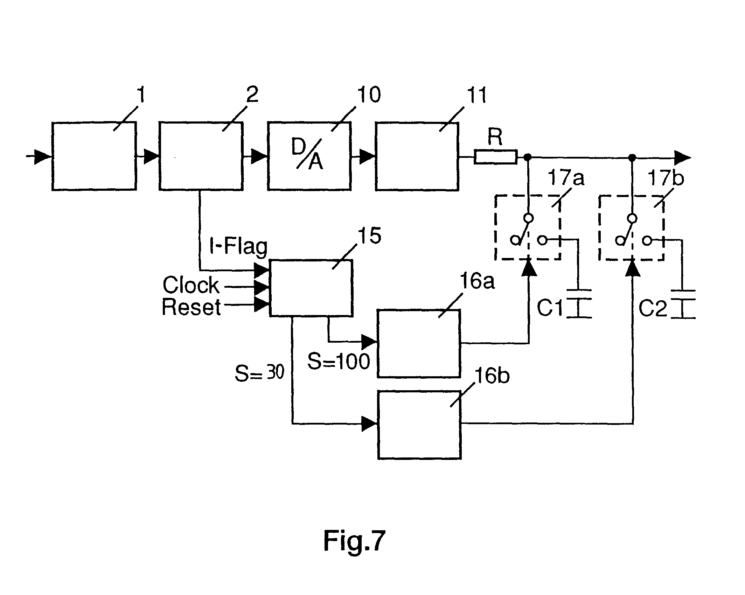

Fig. 7 zeigt das Blockschaltbild einer Audio-Wiedergabeschaltung mit einer zweistufigen physiologischen Steuerung. Durch eine solche Schaltung kann eine mehrstufige Absenkung der höheren Frequenzen vorgenommen werden, indem je nach der Größe der Interpolationsrate mit mehreren Mono-Flip-Flops 16a, 16b entsprechende Tiefpässe 17a, 17b im analogen Audio-Wiedergabekreis aktivierbar sind.

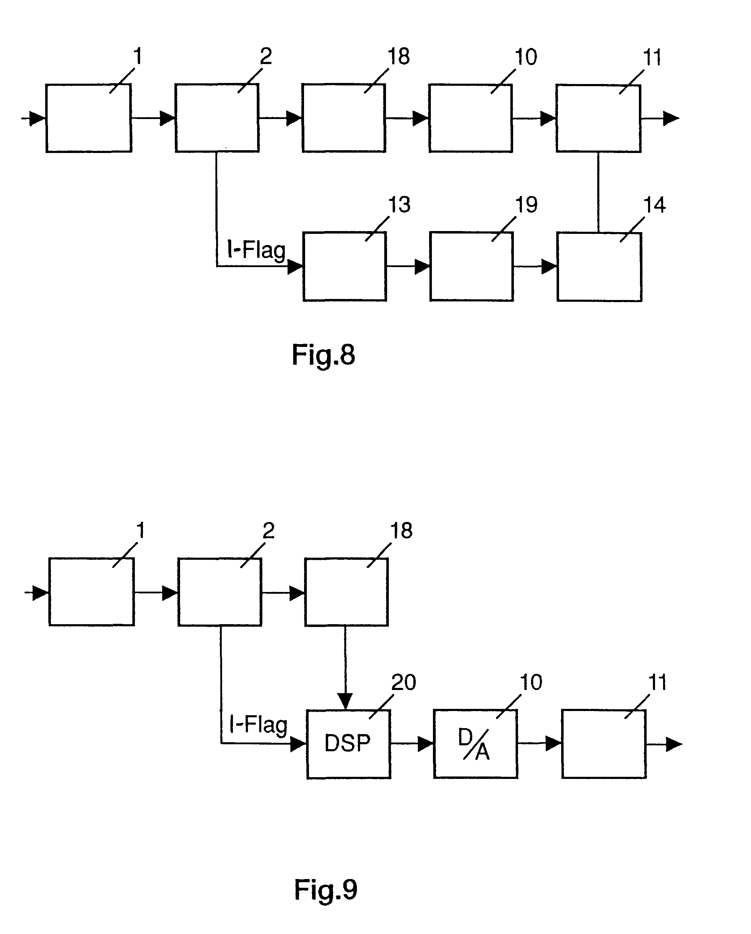

Fig. 8 zeigt eine Weiterbildung der Erfindung gemäß der Fig. 4. In Fig. 8 wird zur Zwischenspeicherung der Audiodaten im digitalen Signalweg ein Speicher 18 vorgeschlagen. Dieser Speicher 18, der auch als sogenanntes Shock-Memory ausgebildet sein kann, kann dazu benutzt werden, um bei auftretenden Interpolationen eine Verbesserung der physiologischen Regelung vorzunehmen und zwar derart, daß die Einschaltung der Regelung bereits vor Beginn der Interpolationsstörungen erfolgt. Dazu ist es vorgesehen, den I-Flag-Ausgang der Interpolationsstufe 2 mit dem I-Flag-Eingang der Schwellwertstufe 13 zu verbinden. Der Schwellwertstufe 13 ist ein Zeitschaltglied 19 nachgeschaltet, welches mit der physiologischen Korrekturstufe 14 verbunden ist, die ihrerseits auf die analoge Ausgangsstufe 11 einwirkt. Zwischen dem Speicher 18 und der analogen Ausgangsstufe 11 ist ein D/A-Wandler 10 angeordnet.

Bislang wurden Beispiele der physiologischen Audio-Steuerung auf der Analogseite der Audiowiedergabeschaltung gezeigt.

Fig. 9 zeigt ein Beispiel zur physiologischen Steuerung der Audiosignale auf der Digitalseite. Dazu werden die im Speicher 18 zwischengespeicherten Daten bei auftretenden Interpolations-Flags über Digitalfilter in einem digitalen Signalprozessor 20 (DSP) frequenzmäßig bewertet und eine entsprechende Reduktion der Amplituden für hohe Frequenzen vorgenommen. Der Ausgang des digitalen Signalprozessors 20 ist mit der D/A-Wandlerstufe 10 verbunden, der ihrerseits wiederum die analoge Audioausgangsstufe 11 nachgeschaltet ist.

Die Erfindung kann bei digitalen Audio- und Videosystemen aller Art eingesetzt werden, insbesondere bei Geräten und Schaltungen im Bereich Compact Disc (CD), magneto-optische Disc (MOD), Digital Audio Broadcast (DAB), digitales Satellitenradio (DSR) NICAM-Geräten, digitale Kompaktkassette (DCC), Mini Disc (MD) sowie Audiosystemen, bei denen Fehler, die in entsprechenden Daten-Korrektursystemen nicht mehr korrigiert werden können, einer Interpolation ausgesetzt werden.

## Patentansprüche

1. Verfahren zur Wiedergabe eines Audiosignals, das vor der Wiedergabe einer Fehlerkorrektur unterzogen wird, wobei Frequenzanteile des Audiosignals in ihrer Amplitude begrenzt und/oder reduziert werden, **dadurch gekennzeichnet, daß** die Fehlerkorrektur eine oder mehrere Interpolationen beinhaltet und Frequenzanteile des Audiosignals nach der Fehlerkorrektur in Abhängigkeit von der Interpolations- oder Fehlerrate in ihrer Amplitude begrenzt oder reduziert werden.

2. Verfahren nach Anspruch 1, **dadurch gekennzeichnet, daß** bei Überschreiten der Interpolationsrate über einen vorbestimmten Schwellwert Frequenzanteile des Audiosignals in ihrer Amplitude begrenzt und/oder reduziert werden.

3. Verfahren nach Anspruch 2, **dadurch gekennzeichnet, daß** eine mehrstufige Absenkung vorgenommen wird.

4. Verfahren nach einem der Ansprüche 1 bis 3, **dadurch gekennzeichnet, daß** nur diejenigen Frequenzanteile des Audiosignals in ihrer Amplitude begrenzt oder reduziert werden, bei denen die Interpolationen zu hörbaren Störungen führen.

5. Verfahren nach Anspruch 4, **dadurch gekennzeichnet, daß** eine Hörbarkeitsgrenze festgelegt und gespeichert wird, die die Hörbarkeit von Interpolationen in Abhängigkeit von der Audiofrequenz berücksichtigt.

6. Verfahren nach einem der vorhergehenden Ansprüche, **dadurch gekennzeichnet, daß** eine Reduzierung und/oder Begrenzung der Amplituden von höheren Frequenzanteilen erfolgt, wenn Störungen, hervorgerufen durch Interpolationen, hörbar sind.

7. Schaltung zur Wiedergabe von Audiosignalen, mit einer Fehlerkorrekturstufe (1,2), einem Zählmittel (13) und einem mit dem Zählmittel (13) verbundenen zweiten Mittel (14) das in Abhängigkeit von einem Ausgangssignal des Zählmittels (13) Frequenzanteile des Audiosignals in ihrer Amplitude begrenzt und/oder reduziert **dadurch gekennzeichnet, daß** die Schaltung eine Interpolationsstufe (2) aufweist, das Zählmittel (13) die Anzahl von Interpolationen oder Fehlern pro vorbestimmter Zeiteinheit mißt, und das zweite Mittel (14) der Fehlerkorrekturstufe (1,2) nachgeordnet ist.

8. Schaltung nach Anspruch 7, **dadurch gekennzeichnet, daß** mehrere Interpolationsstufen (2) vorhanden sind.

9. Schaltung nach einem der Ansprüche 7 oder 8, **dadurch gekennzeichnet, daß** das zweite Mittel mehrere Stufen (16a,17a; 16b,17b) aufweist, die Frequenzanteile des Audiosignals in ihrer Amplitude begrenzen und/oder reduzieren.

10. Schaltung nach einem der Ansprüche 7 bis 9, **dadurch gekennzeichnet, daß** das wiederzugebende Audiosignal ein digitales Audiosignal ist, daß die Interpolationsstufe (2) mit einer D/A-Wandlerstufe (10) verbunden ist, welche ihrerseits wiederum mit einer analogen Audioverarbeitungsstufe (11) verbunden ist, die einen Steuereingang aufweist der mit einem Steuerausgang der zweiten Mittel (14) zur Begrenzung und/oder Reduzierung der Amplitude von Frequenzanteilen verbunden ist.

11. Schaltung nach einem der Ansprüche 7 - 10, **dadurch gekennzeichnet, daß** das Zählmittel (13) einen Zähler (15) aufweist, der die Anzahl von Interpolationen pro vorgegebener Zeiteinheit feststellt, daß der Zähler (15) die pro Zeiteinheit festgestellte Anzahl von Interpolationen mit einem in einem Speicher gespeicherten Schwellwert (S) vergleicht und in Abhängigkeit des Vergleichsergebnisses das zweite Mittel (14) einschaltet.

12. Schaltung nach einem der Ansprüche 7 - 11, **dadurch gekennzeichnet, daß** das zweite Mittel ein Tiefpaß (17, 17a, 17b) ist, der vornehmlich die Amplitude von höheren Frequenzen des Audiosignals begrenzt und/oder reduziert.

13. Schaltung nach einem der Ansprüche 7 - 12, **dadurch gekennzeichnet, daß** im digitalen Signalweg der Audiowiedergabeschaltung, vorzugsweise zwischen der Interpolationsstufe (2) und der D/A-Wandlerstufe (10), ein Zwischenspeicher (18) vorgesehen ist.

14. Schaltung nach einem der Ansprüche 7 - 13, **dadurch gekennzeichnet, daß** zur Reduzierung und/oder Begrenzung der Amplituden der hochfrequenten Audiosignalanteile ein digitaler Signalprozessor (20) vorgesehen ist, welcher zum einen das digitale Audiosignal frequenzmäßig bewertet und in Abhängigkeit der auftretenden Interpolationen die Reduzierung und/oder Begrenzung der Amplitude für hohe Frequenzen vornimmt.

15. Gerät mit einer Schaltung zur Durchführung des Verfahrens nach einem der Ansprüche 1 - 5.

16. Gerät nach Anspruch 15 zur Wiedergabe von digitalen Audiosignalen, insbesondere Kompakt-Discspieler (CD) oder Magneto-Optischer-Platten-Spieler (MOD) oder Digital-Kompakt-Kassetten-Spieler (DCC) oder Digitales Audio Rundfunkgerät (DAB), **dadurch gekennzeichnet, daß** es eine Schaltung gemäß einem der Ansprüche 7 - 14 aufweist.

17. Gerät nach Anspruch 16, **dadurch gekennzeichnet, daß** das Gerät eine Anzeigeeinrichtung zur Anzeige der Interpolationsrate und/oder Fehlerrate aufweist, und daß die Anzeigeeinrichtung mit dem Zählmittel (13) und/oder dem zweiten Mittel (14) verbindbar ist.

## Claims

1. Process for the reproduction of an audio signal which is subjected to an error correction before reproduction, frequency components of the audio signal being limited and/or reduced in their amplitude, **characterized in that** the error correction includes one or more interpolations, and frequency components of the audio signal are limited or reduced in their amplitude after the error correction as a function of the interpolation or error rate.

2. Process according to Claim 1, **characterized in that**, if the interpolation rate exceeds a predetermined threshold, frequency components of the audio signal are limited and/or reduced in their amplitude.

3. Process according to Claim 2, **characterized in that** a multi-stage lowering is carried out.

4. Process according to one of Claims 1 to 3, **characterized in that** only those frequency components of the audio signal in which the interpolations cause audible disturbances are limited or reduced in their amplitude.

5. Process according to Claim 4, **characterized in that** an audibility limit which takes into account the audibility of interpolations as a function of the audio frequency is fixed and stored.

6. Process according to one of the preceding claims, **characterized in that** a reduction and/or limitation of the amplitudes of higher frequency components takes place if disturbances, caused by interpolations, are audible.

7. Circuit for the reproduction of audio signals, having an error correction stage (1, 2), a counting means (13) and a second means (14), which is connected to the counting means and limits and/or reduces frequency components of the audio signal in their amplitude as a function of an output signal of the counting means (13), **characterized in that** the circuit has an interpolation stage (2), the counting means (13) measures the number of interpolations or errors per predetermined unit of time, and the second means (14) is arranged downstream of the error correction stage (1, 2).

8. Circuit according to Claim 7, **characterized in that** there are a plurality of interpolation stages (2).

9. Circuit according to either of Claims 7 and 8, **characterized in that** the second means has a plurality of stages (16a, 17a; 16b, 17b) which limit and/or reduce frequency components of the audio signal in their amplitude.

10. Circuit according to one of Claims 7 to 9, **characterized in that** the audio signal to be reproduced is a digital audio signal, **in that** the interpolation stage (2) is connected to a D/A converter stage (10), which for its part is in turn connected to an analogue audio processing stage (11), which has a control input which is connected to a control output of the second means (14) for limiting and/or reducing the amplitude of frequency components.

11. Circuit according to one of Claims 7 - 10, **characterized in that** the counting means (13) has a counter (15), which establishes the number of interpolations per predetermined unit of time, **in that** the counter (15) compares the number of interpolations established per unit of time with a threshold (S) stored in a memory and, dependent on the result of the comparison, switches on the second means (14).

12. Circuit according to one of Claims 7 - 11, **characterized in that** the second means is a low-pass filter (17, 17a, 17b), which primarily limits and/or reduces the amplitude of higher frequencies of the audio signal.

13. Circuit according to one of Claims 7 - 12, **characterized in that** a buffer memory (18) is provided in the digital signal path of the audio reproduction circuit, preferably between the interpolation stage (2) and the D/A converter stage (10).

14. Circuit according to one of Claims 7 - 13, **characterized in that**, for reducing and/or limiting the amplitudes of the high-frequency audio signal components, there is provided a digital signal processor (20), which on the one hand evaluates the digital audio signal in terms of frequency and performs the reduction and/or limitation of the amplitude for high frequencies as a function of the interpolations occurring.

15. Apparatus having a circuit for carrying out the process according to one of Claims 1 - 5.

16. Apparatus according to Claim 15 for the reproduction of digital audio signals, in particular a compact disc player (CD) or magneto-optical disc player (MOD) or digital compact cassette player (DCC) or digital audio broadcast device (DAB), **characterized in that** it has a circuit according to one of Claims 7-14.

17. Apparatus according to Claim 16,
**characterized in that** the device has an indicating device for indicating the interpolation rate and/or error rate, and **in that** the indicating device can be connected to the counting means (13) and/or the second means (14).

## Revendications

1. Procédé de reproduction d'un signal audio soumis avant la reproduction à une correction d'erreurs, dans lequel l'amplitude des fréquences du signal audio est limitée et/ou réduite, **caractérisé en ce que** la correction d'erreurs inclut une ou plusieurs interpolations et **en ce que** l'amplitude des fréquences du signal audio est limitée ou réduite après la correction des erreurs en fonction du taux d'erreurs ou d'interpolation.

2. Procédé conforme à la revendication 1, **caractérisé en ce que** l'amplitude des fréquences du signal audio est limitée et/ou réduite lorsque le taux d'interpolations dépasse une valeur de seuil prédéfinie.

3. Procédé conforme à la revendication 2, **caractérisé en ce qu'**un abaissement sur plusieurs niveaux est effectué.

4. Procédé conforme à l'une des revendications 1 à 3, **caractérisé en ce que** seules les fréquences du signal audio pour lesquelles les interpolations produisent des perturbations perceptibles sont limitées ou réduites.

5. Procédé conforme à la revendication 4, **caractérisé en ce qu'**une limite d'audibilité qui tient compte de l'audibilité des interpolations en fonction de la fréquence audio est définie et mémorisée.

6. Procédé conforme à l'une des revendications précédentes, **caractérisé en ce que** les amplitudes des fréquences élevées sont réduites et/ou limitées lorsque des perturbations provoquées par des interpolations sont perceptibles.

7. Circuit de reproduction de signaux audio présentant un étage de correction d'erreurs (1, 2), un dispositif de comptage (13) et un deuxième dispositif (14) relié au premier qui limite et/ou réduit l'amplitude des fréquences du signal audio en fonction d'un signal de sortie du dispositif de comptage (13), **caractérisé en ce qu'**il comporte un étage d'interpolation (2), le dispositif de comptage (13) calcule le nombre d'interpolations ou d'erreurs par unité de temps prédéfinie et le deuxième dispositif (14) est placé après l'étage de correction d'erreurs (1, 2).

8. Circuit conforme à la revendication 7, **caractérisé en ce qu'**il existe plusieurs étages d'interpolation (2).

9. Circuit conforme à l'une des revendications 7 ou 8, **caractérisé en ce que** le deuxième dispositif présente plusieurs étages (16a, 17a ; 16b, 17b) qui limitent et/ou réduisent l'amplitude des fréquences du signal audio.

10. Circuit conforme à l'une des revendications 7 à 9, **caractérisé en ce que** le signal audio à reproduire est un signal audio numérique et **en ce que** l'étage d'interpolation (2) est relié à un étage de conversion numérique-analogique (10), qui est relié de son côté à un étage analogique de traitement audio (11) doté d'une entrée de commande reliée à une sortie de commande du deuxième dispositif (14) pour la limitation et/ou la réduction de l'amplitude des fréquences.

11. Circuit conforme à l'une des revendications 7 à 10, **caractérisé en ce que** le dispositif de comptage (13) est équipé d'un compteur (15) qui identifie le nombre d'interpolations par unité de temps prédéfinie et **en ce que** le compteur (15) compare le nombre d'interpolations identifiées par unité de temps avec une valeur de seuil (S) mémorisée et met le deuxième dispositif (14) sous tension en fonction du résultat de la comparaison.

12. Circuit conforme à l'une des revendications 7 à 11, **caractérisé en ce que** le deuxième dispositif est un filtre passe-bas (17, 17a, 17b) qui permet essentiellement de limiter et/ou de réduire l'amplitude des fréquences élevées du signal audio.

13. Circuit conforme à l'une des revendications 7 à 12, **caractérisé en ce qu'**une mémoire tampon (18) est prévue dans le trajet numérique du signal du circuit de reproduction audio, de préférence entre l'étage d'interpolation (2) et l'étage de conversion numérique-analogique (10).

14. Circuit conforme à l'une des revendications 7 à 13, **caractérisé en ce qu'**un processeur de signaux numérique (20) est prévu pour réduire et/ou limiter les amplitudes des portions de signal audio, ce processeur évalue le signal audio en fonction de sa fréquence et limite et/ou réduit l'amplitude des hautes fréquences en fonction des interpolations qui se produisent.

15. Appareil doté d'un circuit pour la mise en oeuvre du procédé conforme à l'une des revendications 1 à 5.

16. Appareil conforme à la revendication 15 pour la reproduction de signaux audio numériques, plus particulièrement un lecteur de disques compacts (CD), un lecteur de disques magnéto-optiques (MOD), un lecteur de cassettes compactes numériques (DCC) ou un appareil de radio audio numérique (DAB), **caractérisé en ce qu'**il présente un circuit conforme a l'une des revendications 7 a 14.

17. Appareil conforme à la revendication 16, **caractérisé en ce qu'**il présente un dispositif d'affichage qui indique le taux d'interpolations et/ou le taux d'erreurs et **en ce que** ce dispositif peut être relié au dispositif de comptage (13) et/ou au deuxième dispositif (14).
